(19) **Europäisches Patentamt**
**European Patent Office**
**Office européen des brevets**

(11) **EP 2 657 193 B1**

(12) **EUROPÄISCHE PATENTSCHRIFT**

(45) Veröffentlichungstag und Bekanntmachung des
Hinweises auf die Patenterteilung:
**27.11.2019   Patentblatt 2019/48**

(51) Int Cl.:
***C02F 1/467*** (2006.01)          ***C25B 1/26*** (2006.01)
***C25B 15/02*** (2006.01)         *C02F 1/461* (2006.01)
*C02F 103/42* (2006.01)

(21) Anmeldenummer: **13164105.2**

(22) Anmeldetag: **17.04.2013**

(54) **ELEKTROLYSEANLAGE UND VERFAHREN ZUM BETREIBEN DERSELBEN**

ELECTROLYSIS ASSEMBLY AND METHOD FOR OPERATING THE SAME

INSTALLATION D'ÉLECTROLYSE ET SON PROCÉDÉ DE FONCTIONNEMENT

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **24.04.2012   DE 102012103609**

(43) Veröffentlichungstag der Anmeldung:
**30.10.2013   Patentblatt 2013/44**

(73) Patentinhaber: **dinotec GmbH
63477 Maintal (DE)**

(72) Erfinder: **Egner-Walter, Martin
35112 Fronhausen (DE)**

(74) Vertreter: **Keil & Schaafhausen
Patent- und Rechtsanwälte PartGmbB
Friedrichstraße 2-6
60323 Frankfurt am Main (DE)**

(56) Entgegenhaltungen:
**EP-A1- 0 792 584       WO-A1-2007/065228
DE-U1- 29 722 822       FR-A1- 2 865 479**

EP 2 657 193 B1

## Beschreibung

Die Erfindung betrifft eine Elektrolyseanlage zur Herstellung einer Alkalihypochloritlösung, insbesondere von Natriumhypochlorit, für die Verwendung zur Wasseraufbereitung. Die Elektrolyseanlage ist mit einer nachgeschalteten Abnahmeeinrichtung verbunden.

Die oben angegebene Elektrolyseanlage wird insbesondere zur Aufbereitung von Wasser (z.B. Trinkwasser, Schwimmbadwasser oder Abwasser) eingesetzt. Das Alkalihypochlorit wird hierfür in der Regel als wässrige Lösung mit einer bestimmten Konzentration an die nachgeschaltete Abnahmeeinrichtung zur Wasseraufbereitung geliefert.

Grundsätzlich kann das Verfahren der Chlor-Alkali-Elektrolyse mit jedem Alkalichlorid durchgeführt werden, aus Kostengründen kommt hierbei jedoch vor allem Natriumchlorid zum Einsatz. Im Folgenden soll daher die Erfindung ausgehend von der Verwendung von Natrium als Alkalimetall erläutert werden.

In bekannten Elektrolyseanlagen zur Darstellung von Chlorgas / Natriumhypochlorit aus Natriumchlorid wird eine Elektrolysezelle bzw. eine eine Elektrolysezelle enthaltende Elektrolyseanlage, die aus mehreren Elektrolysekammern bestehen kann, mit einer Natriumchloridsole beaufschlagt. Durch die Elektrolyse kommt es in wässriger Lösung zu folgender Reaktion:

$$2 \text{ NaCl} + \text{H}_2\text{O} + 446{,}3 \text{ kJ} \rightarrow \text{Cl}_2 + 2 \text{ NaOH} + \text{H}_2.$$

Indem man das anodisch gebildete Chlor ($\text{Cl}_2$) direkt auf die kathodisch gebildete Natronlauge (NaOH) einwirken lässt, bildet sich Natriumhypochlorit (NaOCl).

Als Elektrolyseanlagen zur Darstellung von NaOCl-Lösung werden Rohrzellen-/Durchlauf-Elektrolyseanlagen (mit einer ungeteilten Zelle) oder Membranzellen-Elektrolyseanlagen (mit einer geteilten Zelle) verwendet.

Derzeit werden Elektrolyseanlagen zur Darstellung einer NaOCl-Lösung häufig im An-/Aus-Modus betrieben, wobei die Anlagen im Betriebszustand "An" die Alkalihypochloritlösung mit 100% ihrer Leistung produzieren. Hierbei wird der Einschaltpunkt der Elektrolyse von den Herstellern auf ein sehr niedriges Füllstandsniveau eingestellt, um eine lange Laufleistung zu erzielen und das ständige Ein- und Ausschalten der Anlage zu vermeiden. Damit steigt jedoch auch die Gefahr, dass die Hypochloritlösung nicht in ausreichendem Maße zur Verfügung steht, wenn eine Bedarfsspitze im unteren Einschaltniveau ansteht. Die Elektrolyseanlagen werden daher üblicherweise an den Systemgrenzen gefahren. Um die Belastung der Anlagenteile bei dieser Betriebsweise etwas zu reduzieren, werden die Betriebsstunden bei der Auslegung derartiger Anlagen in der Regel limitiert. Solche Elektrolyseanlagen werden beispielsweise im langfristigen Mittel nicht mehr als 18 bis 20 Stunden pro Tag betrieben werden. Erfahrungsgemäß liegt die tatsächliche mittlere Anlagenbetriebszeit häufig noch darunter.

Beim Betreiben derartiger Elektrolyseanlagen sorgt das ständige Ein- und Ausschalten der Anlagen für einen hohen Materialverschleiß in der Zelle. Weiterhin wirken sich hohe Zelltemperaturen, wie sie im Vollastbetrieb erreicht werden, negativ auf das Material und die nachfolgenden Bauteile aus, so dass deren Standzeit reduziert wird. Bekannt ist auch, dass durch eine erhöhte Zellentemperatur die Chloratbildung im Reaktor - bei der Zusammenführung von Natronlauge und Chlor - unterstützt wird und es dadurch zu einer Anreicherung von Chlorat im Produkt kommt.

Ein Elektrolysegerät des Dokuments DE 297 22 822 U1 weist einen Salzlösebehälter mit einem Siebboden und einem Sicherheitsüberlauf sowie einen Elektrolysebehälter mit einer Elektrolysezelle mit Elektroden auf. Ein Füllstandswächter erfasst einen Flüssigkeitspegel in dem Elektrolysebehälter und übermittelt ihn an eine Steuereinheit, die auch eine Dosiereinrichtung ansteuert. Ein Absinken des Flüssigkeitspegels im Elektrolysebehälter wird über den Füllstandswächter erfasst und an die Steuereinheit gemeldet. Die Steuerung erfolgt so, dass über eine Zufuhrleitung genau die Menge an Betriebswasser zugeführt wird, die über eine Dosiereinrichtung als Natriumhypochloritlösung aus dem Elektrolysebehälter entnommen wird, so dass sich ein gleichmäßiger Kreislaufbetrieb ergibt. Der laufende Betrieb des Elektrolysebehälters erfolgt allein über ein von der Steuereinheit angesteuertes Steuerventil, über das eine festgelegte Betriebswassermenge eingelassen wird.

Dokument WO 2007/065228 A1 beschreibt die Herstellung von Natriumhypochlorit-Lösung in einer Elektrolysezelle mit Elektroden. Die erzeugte Lösung wird an einen Prozesswasserstrom in einer Leitung abgegeben. Eine verdünnte Solelösung fließt durch die Elektrolysezelle, um die Elektrolyse zur ermöglichen. Ein Salzgehalt, ein Durchfluss und eine Temperatur werden überprüft. Wenn der Salzgehalt oder die Temperatur festgelegte Werte überschreiten, werden eine Warn-LED angeschaltet und/oder ein akustisches Warnsignal aktiviert sowie der Elektrolyseprozess gestoppt.

Dokument EP 0 792 584 A1 bezieht sich auf ein Verfahren und eine Vorrichtung zur Herstellung einer stark sauren Flüssigkeit (pH $\leq$ 3) zur Sterilisierung mit einem geringen Gehalt von hypochloriger Säure (0,2 ppm bis 2 ppm) zur direkten Anwendung. Die Sterilisierungsflüssigkeit besteht nur aus dem der Elektrolyse unterzogenen Salzwasser. Eine Elektrolysezelle ist nur genau dann aktiv, wenn und solange ein Nutzer einen Handschalter betätigt.

Eine Elektrolysevorrichtung des Dokuments FR 2 865 479 A1 arbeitet taktweise. In einem Zyklus wird eine Elektrolysezelle jeweils mit Sole befüllt, die Elektrolyse startet und nach deren Abschluss wird das erhaltene Hypochlorit in einen Vorratsbehälter abgepumpt. Anhand von Sensordaten und des Verbrauchs an Hypochlorit kann eine Frequenz der Produktionszyklen gesteuert werden.

Ein weiteres Problem beim Betreiben der Elektroanalyseanlagen, deren Reaktionsprodukt durch eine nachgeschaltete Abnahmeeinrichtung sofort seiner Nutzung, beispielsweise zur Desinfektion von Prozess-, Trink- oder Schwimmbadwasser zugeführt wird, ist, dass die Auslastung der Elektrolyseanlagen sehr heterogen ist. Die durch die Abnahmeeinrichtung entnommene Menge an Reaktionsprodukt variiert in weiten Bereichen und richtet sich beispielsweise nach den Anforderungsspitzen eines Wasserwerks. Daher schlägt die Druckschrift US 4,329,215 zur Abpufferung von Bedarfsspitzen vor, einen Vorratsbehälter vorzusehen, welcher zwischen der Elektrolyseanlage und der Abnahmeeinrichtung angeordnet ist. In diesem Vorratsbehälter ist ein Schwimmer-Schalter vorgesehen sein, der als Sicherheits-Schalter im Produktbehälter dient. Ferner kann die Anlage so eingestellt werden, dass sie bei 7%, 27%, 37%, 46%, 55% oder 100% der Nennleistung betrieben wird. Nachteilig an dem herkömmlichen Vorgehen ist, dass mit einem Schwimmer-Schalter nur sehr träge auf unterschiedliche Abnahmemengen reagiert werden kann und dass die verschiedenen Anlagenleistungen manuell eingestellt werden müssen.

Die Aufgabe der vorliegenden Erfindung besteht somit darin, eine Elektrolyseanlage zu schaffen, in der die Belastung der Anlagenteile minimiert wird. Die Aufgabe besteht zudem darin, ein entsprechendes Verfahren anzugeben.

Die obige Aufgabe wird gelöst durch das in Anspruch 1 angegebene Verfahren. Insbesondere wird kontinuierlich oder quasikontinuierlich eine durch die Abnahmeeinrichtung entnommene Abnahmemenge an Alkalihypochloritlösung und/oder ein Füllstand der Alkalihypochloritlösung in einem zwischen Elektrolyseanlage und Abnahmeeinrichtung angeordneten Vorratsbehälter erfasst und der Arbeitspunkt der Elektrolyseanlage basierend auf der aktuellen Abnahmemenge pro Zeiteinheit und/oder dem aktuellen Füllstand des Vorratsbehälters geregelt.

Das erfindungsgemäße Verfahren hat den Vorteil, dass sich der Arbeitspunkt der Elektrolyseanlage deutlich unterhalb der maximalen Auslastung einstellen lässt. Hierdurch ist es nicht mehr erforderlich, die Anlage an den Systemgrenzen zu fahren. Hieraus resultiert eine deutliche Reduktion der Belastung der Anlagenteile. Gleiches ergibt sich auch für die Wärmeproduktion in der Elektrolysezelle bzw. für die Chloratbildung. Der Arbeitspunkt wird insbesondere so eingestellt, dass die Anlage eher über einen längeren Zeitraum bei geringerer Leistung betrieben wird als über einem kurzen Zeitraum bei hoher Leistung. Hierdurch werden auch die eine kritische Situation darstellenden An- und Abfahrvorgänge des elektrochemischen Prozesses vermieden und die Zeiträume minimiert, in denen dabei nicht die gewünschte Konzentration an Alkalihypochlorit in der Lösung erreicht wird. Der durch die Regelung bewirkte kontinuierliche Anlagebetrieb hat daher den weiteren Vorteil, dass die Konzentration der Alkalihypochloritlösung deutlich besser konstant gehalten werden kann, da durch die lange Laufzeit Vorgänge, bei denen die Anlage herauf bzw. herunter gefahren wird, vermieden werden. Die Anlagenleistung kann durch die kontinuierliche Regelung der Abnahmemenge angepasst werden, sofern diese die maximale Produktionsmenge nicht überschreitet.

In einer Weiterbildung der vorliegenden Erfindung wird der Arbeitspunkt der Elektrolyseanlage derart geregelt, dass die Konzentration des Alkalihypochlorits in der hergestellten Alkalihypochloritlösung bei der gewünschten Konzentration konstant ist. Eine konstante Konzentration des Alkalihypochlorits in der Alkalihypochloritlösung liegt vor, wenn diese um den gewünschten Konzentrationswert um weniger als +/- 10 Gew.% schwankt. Dies hat den Vorteil, dass die in dem Vorratsbehälter gespeicherte oder einer der Elektrolyseanlage nachgeordneten Abnahmeeinrichtung zugeführten Alkalihypochloritlösung ohne weitere Auf- oder Nachbereitung sofort verwenden werden kann. Es ist nämlich insbesondere für die Wasseraufbereitung erforderlich, dass eine bestimmte, vorgegebene Konzentration an Natriumhypochlorit vorliegt. Die Konzentration liegt vorzugsweise zwischen 5 g/l und 40 g/l, bei einer Membranzellen-Elektrolyseanlage besonders bevorzugt zwischen 25 g/l und 35 g/l und bei einer Rohrzellen-Elektrolyseanlage zwischen 5 g/l und 20 g/l.

Der Arbeitspunkt der Elektrolyseanlage wird derart geregelt, dass die Leistung der Elektrolyseanlage abhängig von der gemessenen Abnahmemenge pro Zeiteinheit und/oder dem aktuellen Füllstand des Vorratsbehälters verändert wird. Hierbei wird als Leistung der Elektrolyseanlage die Produktionsmenge an $Cl_2$ pro Zeiteinheit bezeichnet. Durch diese Regelung kann unmittelbar auf Schwankungen in der Abnahmemenge reagiert und die Anlage muss nicht zu jedem Zeitpunkt mit 100% Leistung betrieben werden. Sollte also aufgrund des Verhaltens der Abnahmeeinrichtung in einem bestimmten, vorgegebenen Zeitraum, zum Beispiel über eine Stunde, festgestellt werden, dass ein großer Bedarf an Alkalihypochloritlösung vorhanden ist, so regelt das erfindungsgemäße Verfahren die Leistung der Elektrolyseanlage und entsprechend die zugehörigen Durchflüsse nach oben, das heißt, es wird in kurzer Zeit eine große Menge an Alkalihypochloritlösung erzeugt. Damit kann beispielsweise der Vorratsbehälter wieder einen Füllstand erreichen, der einen ausreichenden Vorrat für großen Abnahmebedarf darstellt. Demnach stellen bei dem erfindungsgemäßen Regelungsverfahren die aktuelle Abnahmemenge pro Zeiteinheit und/oder der aktuelle Füllstand des Vorratsbehälters Führungsgrößen des Regelkreises dar. Die Produktionsmenge an $Cl_2$ pro Zeiteinheit, z.B. in [g/h], in Abhängigkeit der Anlagenleistung und die Durchflüsse (Sole, Frischwasser) der Elektrolyseanlage stellen die Stellglieder dar und als Stellgröße im Regelkreis ist die Produktentnahme aus der Elektrolyseanlage bzw. dem Vorratsbehälter vorgesehen. Als Regeleinrichtung werden ein P- oder I- oder D-Regler oder ein Fuzzy-Regler oder eine Kombination aus mindestens zwei dieser Reglertypen verwendet.

Da die Leistung der Elektrolyseanlage im Wesentlichen von der auf der Kathodenseite zugeführten Frischwassermenge, von der auf der Anodenseite zugeführten Sole und von dem zwischen Anode und Kathode fließenden Zellenstrom abhängt (die Zellspannung stellt sich entsprechend ein), wird, um den einzuregelnden Arbeitspunkt der Elektrolyseanlage zu realisieren, in einem bevorzugten Ausführungsbeispiel die auf der Kathodenseite der Elektrolyseanlage zugeführte Frischwassermenge erfasst und entsprechend des einzuregelnden Arbeitspunkts der Elektrolyseanlage geregelt. Alternativ oder zusätzlich wird die auf der Anodenseite der Elektrolyseanlage zugeführte Solemenge erfasst und entsprechend des einzuregelnden Arbeitspunkts der Elektrolyseanlage geregelt. Weiter alternativ oder zusätzlich wird der zwischen der Anode und der Kathode der Elektrolysezelle der Elektrolyseanlage fließende Zellenstrom erfasst und entsprechend des einzuregelnden Arbeitspunkts der Elektrolyseanlage geregelt. Hierbei erfolgt die Messung der Frischwassermenge auf der Kathodenseite beispielsweise mittels eines Flügelradmessers. Die zugeführte Frischwassermenge wird z.B. mittels eines regelbaren Proportionalventils eingestellt. Die zugeführte Solemenge kann beispielsweise mittels einer digitalen Dosierpumpe mit integrierter Durchflussmessung erfasst werden.

Die vorstehend beschriebene Regelung reagiert demnach nicht erst durch Einschalten der Elektrolyseanlage, wenn beispielsweise der Füllstand des Vorratsbehälters unter ein bestimmtes Niveau gefallen ist, sondern versucht aufgrund der intelligenten P- oder I- oder D-Regelung oder Fuzzy-Regelung oder einer Kombination aus mindestens zwei dieser Regelungstypen zeitnah basierend auf der Messung der Störgröße Produktentnahme diese wieder auszugleichen. Hierfür enthält die Regelung Kennfelder, insbesondere Kennlinien, in denen für die gewünschte Alkalihypochloritkonzentration und die benötigte Leistung, also die benötigte Produktionsmenge an $Cl_2$ pro Zeiteinheit, der Elektrolyseanlage zum Entnahmeausgleich zugehörige Soll-Parameterbereiche oder Sollwerte für die zuzuführende Frischwassermenge, die zuzuführende Solemenge und den benötigten Zellenstrom enthalten sind. Diese Kennfelder oder Kennlinien werden verwendet, um den gewünschten Arbeitspunkt bei einer bestimmten, aufgrund der Abnahmemenge an Alkalihypochloritlösung benötigten Elektrolyseanlagenleistung einzustellen.

Bevorzugte Bereiche für die Leistung der Elektrolyseanlage einer MZE 1000 (Membranzellen-Elektrolyseanlage mit einer Leistung von 1000 g/h $Cl_2$) liegen bei 500 g/h bis 1000 g/h NaOCl. Entsprechend liegt die bevorzugte zuzuführende Frischwassermenge im Bereich von 20 l/h bis 30 l/h, der bevorzugte Zellenstrom im Bereich von 50 A bis 100 A und die bevorzugte zuzuführende Solemenge im Bereich von 7,5 l/h bis 15 l/h.

In einem weiteren bevorzugten Ausführungsbeispiel des erfindungsgemäßen Verfahrens werden die Temperatur der Umgebungsluft und/oder die Temperatur des auf der Kathodenseite der Elektrolyseanlage zugeführten Frischwassers und/oder die Temperatur der auf der Anodenseite der Elektrolyseanlage zugeführten Sole (die zuletzt genannte Temperatur nur bei Membranzellen-Elektrolyseanlagen, d.h. mit geteilter Zelle) und/oder die Temperatur des Produkts am Ausgang der Elektrolyseanlage und/oder die Temperatur der Magersolerückführung und/oder die Mischwassertemperatur der der Elektrolyseanlage zugeführten Solelösung (die zuletzt genannte Temperatur nur bei Durchlaufelektrolyseanlagen, d.h. mit ungeteilter Zelle) erfasst und mindestens eine dieser Temperaturen zur Einstellung des Arbeitspunkts der Elektrolyseanlage (zusätzlich) herangezogen. Dieses Ausführungsbeispiel beruht auf der Erkenntnis, dass die Temperatur in der Elektrolyseanlage abhängig von den genannten Temperaturen und der Anlagenbetriebsweise ist. Wird jeweils ein Grenzwert für die genannten Temperaturen überschritten, so wird die Temperatur in der Elektrolyseanlage in unzulässiger Weise erhöht und die Standzeit der Anlagenteile reduziert. Demnach ist es vorteilhaft, die genannten Temperaturen ständig zu erfassen. Falls einer der Grenzwerte der angegebenen Temperaturen überschritten wird, wird erfindungsgemäß der Arbeitspunkt der Elektrolyseanlage so verändert, dass die Leistung der Elektrolyseanlage reduziert wird. Dies führt zu einer Verringerung der Temperatur in der Elektrolyseanlage. Zusätzlich kann der Betreiber der Elektrolyseanlage bei Überschreiten eines Grenzwerts informiert, beispielsweise über eine Anzeige oder eine Nachricht (z.B eine E-Mail oder dergl.), und mit dieser vorzugsweise gebeten werden, Kühlungsmaßnahmen für die Elektrolyseanlage einzuleiten. Dies bewirkt in vorteilhafter Weise, dass die Beschädigung von Anlagenteilen verringert oder sogar vermieden wird. Gleichzeitig beugt sie einem unzulässigen Anstieg des Chloratwerts vor.

Die obige Aufgabe wird mit den gleichen Vorteilen durch eine Elektrolyseanlage mit den Merkmalen des Anspruchs 8 gelöst. Die Elektrolyseanlage weist insbesondere eine Regeleinrichtung zur Regelung des Arbeitspunkts der Elektrolyseanlage auf. Ferner ist eine erste Erfassungseinrichtung vorgesehen, welche kontinuierlich oder quasikontinuierlich eine durch die Abnahmeeinrichtung entnommene Abnahmemenge an Alkalihypochloritlösung und/oder einen Füllstand an Alkalihypochloritlösung in einem zwischen Elektrolyseanlage und Abnahmeeinrichtung angeordneten Vorratsbehälter (z.B. ein hydropneumatischer Füllstandsmesser) erfasst und an die Regeleinrichtung überträgt, wobei die Regeleinrichtung den Arbeitspunkt der Elektrolyseanlage basierend auf der aktuellen Abnahmemenge pro Zeiteinheit und/oder dem aktuellen Füllstand des Vorratsbehälters regelt.

In einem Ausführungsbeispiel der erfindungsgemäßen Elektrolyseanlage ist eine P- oder I- oder D-Regelung oder Fuzzy-Regelung oder eine Kombination aus mindestens zwei dieser Regelungstypen, vorgesehen, die den Arbeitspunkt der Elektrolyseanlage derart regelt, dass die Konzentration des Alkalihypochlorits in der durch die Anlage hergestellten Alkalihypochloritlösung konstant ist. Diese Regeleinrichtung übernimmt die Regelung des Arbeitspunkts der Elektrolyseanlage derart, dass die Leistung der Elektrolyseanlage abhängig von der gemessenen Abnahmemenge pro Zeiteinheit und/oder dem aktuellen Füllstand des Vorratsbehälters verändert wird. Ferner ist in einer Weiterbildung der Erfindung eine zweite Erfassungseinrichtung, welche die auf der Kathodenseite der Elektrolyseanlage zugeführte Frischwassermenge erfasst, z.B. ein Flügelradmesser, und/oder eine dritte Erfassungseinrichtung, welche die auf der Anodenseite der Elektrolyseanlage zugeführte Solemenge, z.B. eine Dosierpumpe mit Durchflussmessung, und/oder eine vierte Erfassungseinrichtung vorgesehen, welche den zwischen der Anode und der Kathode der Elektrolyseanlage fließenden Zellenstrom erfasst, z.B. das in die Regeleinrichtung integrierte Amperemeter. Basierend auf der Erfassung dieser Parameter werden von der Regeleinrichtung erfindungsgemäß die zuzuführende Frischwassermenge und/oder die zuzuführende Solemenge und/oder den Zellenstrom der Elektrolyseanlage jeweils entsprechend des einzuregelnden Arbeitspunkts der Elektrolyseanlage geregelt.

In einem weiteren Ausführungsbeispiel ist zudem oder alternativ vorgesehen, dass eine fünfte Erfassungseinrichtung, welche die Temperatur der Umgebungsluft erfasst, und/oder eine sechste Erfassungseinrichtung, welche die Temperatur des auf der Kathodenseite der Elektrolyseanlage zugeführten Frischwassers erfasst, und/oder eine siebte Erfassungseinrichtung vorgesehen, welche die Temperatur der auf der Anodenseite der Elektrolyseanlage zugeführten Sole erfasst (die siebte Erfassungseinrichtung nur bei Membranzellen-Elektrolyseanlagen, d.h. mit geteilter Elektrolysezelle), und/oder eine achte Erfassungseinrichtung vorgesehen, welche die Temperatur des Magersolerücklaufs erfasst, und/oder eine neunte Erfassungseinrichtung vorgesehen, welche die Temperatur des Produkts am Ausgang der Elektrolyseanlage erfasst, und/oder eine zehnte Erfassungseinrichtung, welche die Mischwassertemperatur der der Elektrolyseanlage zugeführten Solelösung erfasst (die zehnte Erfassungseinrichtung nur bei Durchlaufelektrolyseanlagen, d.h. mit ungeteilter Zelle), und die Regeleinrichtung zur Einstellung des Arbeitspunkts der Elektrolyseanlage mindestens eine der vorgenannten erfassten Temperaturen heranzieht. Die Erfindung wird nachfolgend anhand eines Ausführungsbeispiels und der Figuren näher erläutert.

Es zeigen schematisch:

Figur 1    eine erfindungsgemäße Elektrolyseanlage,
Figur 2    das zugehörige Regelungsschema,
Figur 3    Kennfelder für die Regelung der Elektrolyseanlage für die NaOCl-Konzentration von 29,7 bis 30,3 g/l bei verschiedenen zugeführten Solemengen von a) 5 l/h, b) 10 l/h und c) 15 l/h in einem mittleren Leistungsbereich der Elektrolyseanlage, wobei auf der x-Achse der elektrische Zellenstrom zwischen Anode und Kathode der Elektrolyseanlage [in A] und auf der y-Achse die zuzuführende Frischwassermenge [in l/h] aufgetragen ist, und

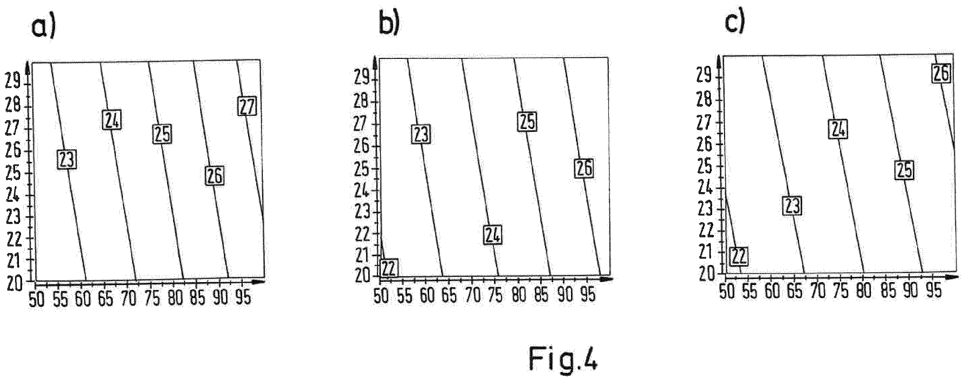

Figur 4    Darstellungen der Temperaturabhängigkeit des Elektrolyseprozesses einer Membranzellenelektrolyse für eine Anlage im Leistungsbereich von 1000 g/h $Cl_2$ (MZE 1000) von den Regelgrößen Zellenstrom, Frischwasserdurchfluss und Soledurchfluss, wobei die Solemengen a) 5 l/h, b) 10 l/h und c) 15 l/h betragen und wobei auf der x-Achse der elektrische Zellenstrom zwischen Anode und Kathode der Elektrolyseanlage [in A] und auf der y-Achse die zugeführte Frischwassermenge [in l/h] aufgetragen ist. Die an den von links oben nach rechts unten verlaufenden Linien zwischen den Bereichen angegebenen Zahlen entsprechen jeweils der Temperatur [in °C] der NaOCl-Lösung am Ausgang der Elektrolyseanlage.

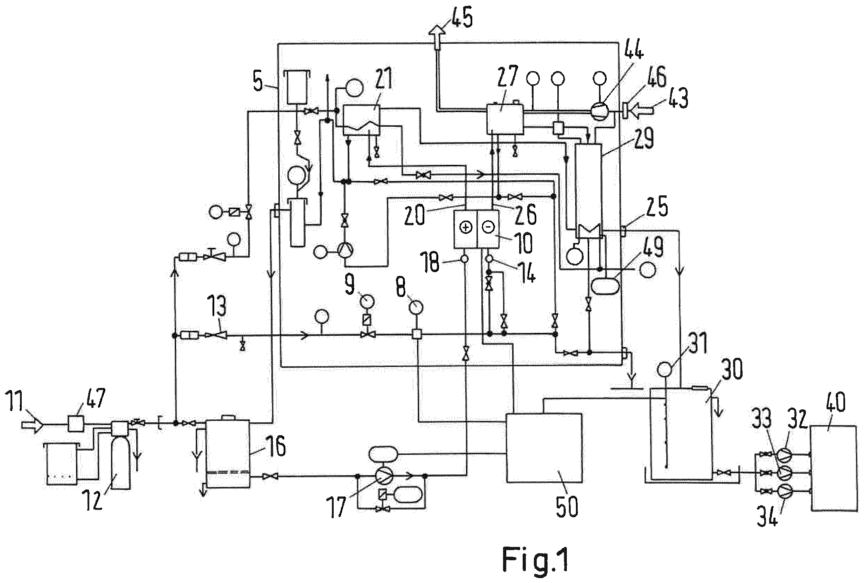

Die in Fig. 1 gezeigte Elektrolyseanlage 5 zur Herstellung einer wässrigen Natriumhypochlorit-Lösung weist eine Elektrolysezelle 10 auf, welche vorzugsweise als Membran-Elektrolysezelle ausgebildet ist und mehrere Kammern aufweisen kann. Die Elektrolysezelle 10 ist kathodenseitig mit einer Frischwasserzufuhr 11 verbunden, wobei das Frischwasser vor Einspeisung in die Elektrolysezelle 10 mittels einer Enthärtungsanlage 12 auf den erforderlichen Härtewert, vorzugsweise < 0,1 dH (Gesamthärte), gebracht wird. Die Zuleitung des Frischwassers erfolgt über einen Druckminderer 13, einem Flügelradsensor 8 zur Erfassung des zugeführten Frischwassers und einem Proportionalventil 9 zur Regelung derselben an den kathodenseitigen Eingang 14 der Elektrolysezelle 10.

Für die Bereitstellung der erforderlichen Natriumchlorid-Sole steht ein Solebehälter 16 mit Überlauf und Befüllungsventil zur Verfügung. Die Zufuhr der Sole aus dem Solebehälter 16 erfolgt über eine Soledosierpumpe 17 an den anodenseitigen Eingang 18 der Elektrolysezelle 10.

Die sich an der Anode der Elektrolysezelle 10 bildende Magersole wird über den Ausgang 20 der Elektrolysezelle 10 und einen dahinter liegenden Chlorabscheider 21 zu dem Solebehälter 16 zurückgeführt. Der Chlorabscheider 21 trennt das sich ebenfalls bildende $Cl_2$ von der Magersole. Das $Cl_2$ wird dann einem NaOCl-Reaktor 29 zugeführt.

Der an der Kathode der Elektrolysezelle 10 gebildete Wasserstoff $H_2$ tritt aus dem Ausgang 26 der Elektrolysezelle 10 zusammen mit Natronlauge aus und wird mittels eines nachgeschalteten Wasserstoffabscheiders 27 aus der Natronlauge abgetrennt.

Die Natronlauge wird dann in den NaOCl-Reaktor 29 geführt. Dort reagiert das von dem Chlorabscheider 21 zugeleitete $Cl_2$ mit der Natronlauge, das aus dem Wasserstoffabscheider 27 zugeführt wird, zu NaOCl. Das aus dem Reaktor 29 austretende Reaktionsprodukt (NaOCl-Lösung) gelangt dann über den Ausgang 25 der Elektrolyseanlage in den Vorratsbehälter 30, welcher einen hydropneumatischen Füllstandsmesser 31 aufweist. In dem Vorratsbehälter 30 wird die NaOCl-Lösung zunächst gespeichert. Von der Abnahmeeinrichtung 40 kann dann über Pumpen 32, 33, 34 die erforderliche Menge an NaOCl-Lösung aus dem Vorratsbehälter angefordert, entnommen und bspw. für die Aufbereitung von Schwimmbadwasser genutzt werden.

Die Elektrolyseanlage weist ferner eine Frischluftzufuhr 43 auf, welche über einen Ventilator 44 in den Wasserstoffabscheider 27 eingeblasen wird und den dort austretenden Wasserstoff an die Umgebung abführt (siehe Pfeil 45). Vor dem Ventilator 44 ist eine Temperaturmesseinrichtung 46 vorgesehen, welche die Temperatur der Umgebung erfasst.

Der Füllstandsmesser 31 erfasst kontinuierlich oder quasikontinuierlich den Füllstand des Vorratsbehälters 30 mit der wässrigen NaOCl-Lösung. In der Frischwasserzufuhr 11, vor der Enthärtungsanlage 12 ist ferner eine Temperaturmesseinrichtung 47 vorgesehen, welche die Temperatur des zugeführten Frischwassers misst. Am Ausgang des NaOCl-Reaktors 29 ist eine Temperaturmesseinrichtung 49 vorgesehen, welche die Temperatur der aus der Elektrolyseanlage austretenden NaOCl-Lösung erfasst. An der Soledosierpumpe 17 kann zudem die Durchflussmenge der zugeführten Sole erfasst werden.

Ferner weist die Elektrolyseanlage eine Regeleinrichtung 50 auf, welche zur Regelung der Leistung, also der Produktionsmenge an $Cl_2$ pro Zeiteinheit, der Elektrolyseanlage 5 vorgesehen ist. Die Regeleinrichtung 50 ist mit dem Füllstandsmesser 31 verbunden und berechnet aus der kontinuierlich oder quasikontinuierlich durch den Füllstandsmesser 31 ermittelten vorhandenen Menge an NaOCl-Lösung im Vorratsbehälter 30 die aktuelle Abnahmemenge pro Zeiteinheit (beispielsweise pro Stunde) und regelt ausgehend davon die Leistung der Elektrolyseanlage 5.

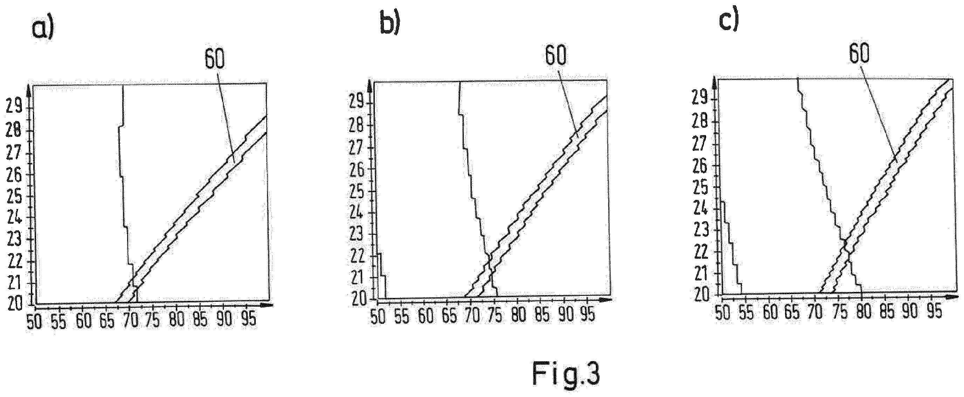

Die Leistung wird mittels der in Fig. 3 gezeigten und im Speicher der Regeleinrichtung 50 vorhandenen Kennfelder oder Kennlinien eingestellt. Insbesondere werden der Strom, der in der Elektrolysezelle 10 zwischen Anode und Kathode fließt, die Menge an zugeführtem Frischwasser sowie die Menge an zugeführter Sole für die entsprechende Leistung im gewünschten Konzentrationsbereich des Produkts (in der Regel 29 bis 31 g/l NaOCl in Wasser bei diesem Typ einer Elektrolyseanlage) für die benötigte Zellenleistung vorgegeben. Die Regeleinrichtung 50 weist ferner einen nicht dargestellten Strommesser (z.B. Amperemeter) auf, mit dem der zwischen Anode und Kathode der Elektrolysezelle 10 tatsächlich fließende Strom ermittelt werden kann. Der gewünschte Konzentrationsbereich für verschiedene Leistungen der Elektrolyseanlage liegt bei den in Fig. 3 dargestellten Kennfeldern jeweils auf den von links unten nach rechts oben verlaufenden streifenförmigen Bereichen und ist jeweils mit dem Bezugszeichen 60 versehen.

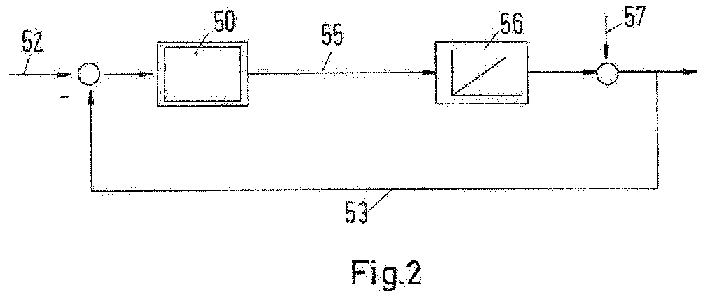

Die Arbeitsweise der Regeleinrichtung 50 wird nochmals anhand des in Fig. 2 dargestellten Regelungsschemas erläutert. Die Eingangsgröße 52 bildet der geforderte Füllstand des Vorratsbehälters 30. Die Regeleinrichtung 50 ermittelt aus der Eingangsgröße 52 und der gemessenen Regelgröße 53 (gemessener Füllstand des Vorratsbehälters 30) die Differenz und bestimmt hieraus den Regelungsbedarf 55 hinsichtlich der Leistung der Elektrolyseanlage. Dieser wird mit Hilfe von mehrdimensionalen Kennfeldern 56, beispielsweise den in Fig. 3 dargestellten Kennfeldern, realisiert. Auf die geregelte Leistung der Elektrolyseanlage 5 wirkt die Entnahme an NaOCl-Lösung aus dem Vorratsbehälter 30 als Störgröße 57.

Die Regeleinrichtung 50 weist Eigenschaften eines P-, I- oder D-Reglers bzw. Kombinationen daraus und/oder eines Fuzzy-Reglers auf.

Wenn nun eine größere Menge an NaOCl-Lösung aus dem Vorratsbehälter 30 entnommen wurde, so ist die Regeleinrichtung 50 bestrebt, die Leistung der Elektrolyseanlage zu erhöhen. Hierfür wird der Arbeitspunkt der Elektrolyseanlage in den in Fig. 3 dargestellten Kennfeldern, nämlich den von links unten nach rechts oben verlaufenden streifenförmigen Bereichen 60, von unten nach oben verschoben. Der neue Arbeitspunkt liegt z.B. bei einem höheren Zellenstrom, einer entsprechenden höheren Solezufuhrmenge und/oder einer entsprechenden höheren Frischwasserzufuhrmenge. Stehen die entsprechenden Werte für die Parameter der Elektrolyseanlage fest, so werden diese an die entsprechenden Einstell- und Erfassungseinrichtungen übermittelt, nämlich ein erhöhter Wert für die zuzuführenden Frischwasser-Menge und für die zuzuführende Solemenge sowie einen erhöhten Wert für den Zellenstrom. Die Soledosierpumpe 17 stellt dann den gewünschten Wert der Solemenge, das Proportionalventil 9 den gewünschten Wert der Frischwassermenge und die Regeleinrichtung 50 den gewünschten Elektrodenstrom ein, so dass anschließend die gewünschte Leistung der Elektrolyseanlage erreicht wird, die gewünschte Menge an NaOCl-Lösung erzeugt und wieder in den Vorratsbehälter 30 eingespeist werden kann.

Stellt der Füllstandsmesser 31 im Zusammenspiel mit Regeleinrichtung 50 fest, dass ausreichend NaOCl-Lösung im Vorratsbehälter 30 vorhanden ist, wird die Leistung der Elektrolyseanlage 5 in analoger Weise wieder nach unten geregelt. Die erfindungsgemäße Regelung berücksichtigt insbesondere für eine Membranzellen-Elektrolyseanlage mit Solerücklauf (z.B. siehe Fig. 1) die Erkenntnis, dass der Soledurchfluss durch die Elektrolysezelle 10 in den genannten Grenzen nur einen sehr geringen Einfluss auf die Produktmenge und Produktkonzentration hat. Demgegenüber hat der Soledurchfluss einen größeren Einfluss auf das Temperaturverhalten in der Elektrolysezelle (siehe Figur 3). Es könnte daher beispielsweise die zugeführte Solemenge weitgehend konstant gehalten und lediglich die zugeführte Frischwassermenge und der Zellenstrom geändert werden, wenn das Temperaturverhalten noch akzeptabel ist. Da jedoch ein Teil der im Produktionsprozess entstehenden Natronlauge zur pH-Korrektur verwendet wird, muss gegebenenfalls durch andere Maßnahmen der gewünschte pH-Wert des Produktes eingestellt werden.

Bei der Membranzellenelektrolyse ohne Solerücklauf (nicht dargestellt) kommt es bei gleichbleibendem Soledurchfluss durch die Elektrolysezelle zu einem erhöhten Salzeintrag in das Produkt, da die restliche Magersole in das Produkt geleitet wird. Gleichzeitig würde es zu einer Verdünnung der Produktkonzentration kommen. Daher wird in diesem Fall bei Verringerung der Leistung die zugeführte Solemenge verringert.

Bei einer Durchlaufelektrolyse (nicht dargestellt) bestimmt insbesondere das Mischungsverhältnis (zugeführte Solemenge / zugeführte Frischwassermenge) den Soleeintrag im Reaktor. Ein abweichendes Mischungsverhältnis kann zur unerwünschten Änderung der Produktkonzentration führen. Bei der Durchlaufelektrolyse wird daher bei Veränderung des Arbeitspunktes der Elektrolyseanlage insbesondere das oben angegebene Mischungsverhältnis konstant gehalten.

Aus den in Fig. 3 gezeigten Kennfeldern ergibt sich insbesondere ein in etwa linearer Zusammenhang zwischen dem Zellenstrom bzw. zwischen der zugeführten Solemenge und der zugeführten Frischwassermenge. Dieser kann etwa mit

$$Q(Frischwasser) = 0{,}22*S + 5{,}66 + Q(Sole)*(0{,}046*S - 3{,}78)$$

dargestellt werden, wobei die zugeführte Frischwassermenge Q(Frischwasser) in [l/h], die Stromstärke S des Zellenstroms in [A] und die zugeführte Solemenge Q(Sole) in [l/h] angegeben sind.

Bei anderen Elektrolyseanlagen sind andere Zusammenhänge zwischen den genannten Größen zu beobachten.

Alternativ oder zusätzlich zur Messung des Füllstands der in dem Vorratsbehälter gesammelten NaOCl-Lösung kann der Durchfluss an NaOCl-Lösung im Bereich der Pumpen der Abnahmeeinrichtung 40, z.B. der Durchfluss durch die Pumpen 32, 33, 34, als Maß für die von der Abnahmeeinrichtung 40 angeforderte Menge an NaOCl-Lösung gemessen und aus diesem die Produktentnahme pro Zeiteinheit bestimmt und basierend hierauf analog zu obigem Vorgehen die Regelung der Leistung der Elektrolyseanlage 5 mittels der Regeleinrichtung 50 durchgeführt werden.

Fig. 4 zeigt die Temperaturabhängigkeit des aus der Elektrolyseanlage 5 am Ausgang 25 austretenden Produkts in Abhängigkeit von der zugeführten Solemenge, der zugeführten Frischwassermenge und des Zellenstroms. Die Regeleinrichtung 50 arbeitet in einem bevorzugten Ausführungsbeispiel derart, dass die Temperatur der NaOCl-Lösung eine Temperatur von 35°C nicht überschreitet, da sonst, wie oben geschildert, die Standzeit der Bauteile der Elektrolyseanlage verkürzt wird. Die Temperatur des Produkts, welche anhand der in der Regeleinrichtung 50 gespeicherten Kennfelder (siehe Fig. 3) gespeichert sind, wirkt daher in diesem bevorzugten Ausführungsbeispiel als weitere Störgröße in dem in Fig. 2 dargestellten Regelkreis. Gegebenenfalls wird ein nur anhand der Abnahmemenge oder des Füllstands des Vorratsbehälters ermittelter Arbeitspunkt korrigiert, wenn z.B. anhand der in Fig. 3 gezeigten Kennfelder festgestellt wird, dass die Temperatur des Produkts zu hoch wird. In diesem Fall werden gegebenenfalls die zugeführte Frischwassermenge und/oder die zugeführte Solemenge und/oder der zwischen Anode und Kathode der Elektrolysezelle fließende Zellenstrom entsprechend verringert und hierdurch die Produktionszeit verlängert.

Alternativ kann die Temperatur des Produkts durch die Temperaturmesseinrichtung 49 bestimmt werden. Die Regeleinrichtung 50 kann dann, ausgehend von dieser Temperatur den Arbeitspunkt der Elektrolyseanlage entsprechend zu geringeren Leistungen verschieben, wenn diese zu hoch ist.

Die mit der Temperaturmesseinrichtung 46 erfasste Umgebungstemperatur und die mit der Temperaturmesseinrichtung 47 erfasste Frischwasserzufuhr 11 können gegebenenfalls als zusätzliche Parameter in die Bestimmung der Produkttemperatur durch die Regeleinrichtung 50 mit einfließen.

Aufgrund der Verwendung einer PID- und/oder Fuzzy-Regelung zur Einstellung des Arbeitspunkts der Elektrolyseanlage 5 wird bei dem erfindungsgemäßen Verfahren bzw. der erfindungsgemäßen Vorrichtung abhängig von einer Abnahmemenge an NaOCl-Lösung pro Zeiteinheit oder einem Füllstand eines Vorratsbehälters eine Selbstoptimierung insbesondere bei einer Membranzellenelektrolyse erreicht, welche es erlaubt, die Betriebszeit zu verlängern und die Anlage über weite Strecken unterhalb der Maximalleistung zu betreiben. Dies führt dazu, dass Anlagenteile weniger belastet werden und die OH-Radikalbildung verringert wird.

**Bezugszeichenliste:**

| | |
|---|---|
| 5 | Elektrolyseanlage |
| 8 | Flügelradmesser |
| 9 | Proportionalventil |
| 10 | Elektrolysezelle |
| 11 | Frischwasserzufuhr |
| 12 | Enthärtungsanlage |
| 13 | Druckminderer |
| 14 | Eingang der Elektrolysezelle 10, kathodenseitig |

| 16 | Solebehälter |
| 17 | Soledosierpumpe |
| 18 | Eingang der Elektrolysezelle, anodenseitig |
| 20 | Ausgang der Elektrolysezelle, anodenseitig |
| 21 | Chlorabscheider |
| 25 | Ausgang der Elektrolyseanlage |
| 26 | Ausgang der Elektrolysezelle 10, kathodenseitig |
| 27 | Wasserstoffabscheider |
| 29 | Reaktor |
| 30 | Vorratsbehälter |
| 31 | hydropneumatischer Füllstandsmesser |
| 32, 33, 34 | Pumpe |
| 40 | Abnahmeeinrichtung |
| 43 | Frischluftzufuhr |
| 44 | Ventilator |
| 45 | Pfeil |
| 46, 47, 49 | Temperaturmesseinrichtung |
| 50 | Regeleinrichtung (PID- und/oder Fuzzy-Regler) |
| 52 | Eingangsgröße |
| 53 | gemessene Regelgröße |
| 55 | Regelungsbedarf |
| 56 | Kennfeld |
| 57 | Störgröße |
| 60 | Bereich des Kennfelds, in dem bevorzugte Produktkonzentration zu erwarten ist |

**Patentansprüche**

1. Verfahren zum Betreiben einer Elektrolyseanlage (5) zur Herstellung einer Alkalihypochloritlösung, insbesondere von Natriumhypochlorit für die Verwendung zur Wasseraufbereitung,
   wobei die Elektrolyseanlage (5) mit einer nachgeschalteten Abnahmeeinrichtung (40) verbunden ist,
   wobei kontinuierlich oder quasikontinuierlich eine durch die Abnahmeeinrichtung (40) entnommene Abnahmemenge pro Zeiteinheit an Alkalihypochloritlösung und/oder ein Füllstand der Alkalihypochloritlösung in einem zwischen Elektrolyseanlage (5) und Abnahmeeinrichtung (40) angeordneten Vorratsbehälter (30) erfasst wird und
   ein Arbeitspunkt der Elektrolyseanlage (5) derart geregelt wird, dass die Produktionsmenge an $Cl_2$ pro Zeiteinheit der Elektrolyseanlage (5) abhängig von der gemessenen Abnahmemenge pro Zeiteinheit und/oder dem aktuellen Füllstand des Vorratsbehälters (30) verändert wird,
   **dadurch gekennzeichnet, dass** ein P-, I- oder D-Regler oder ein Fuzzy-Regler oder eine Kombination aus mindestens zwei dieser Reglertypen als eine Regeleinrichtung (50) verwendet werden und
   dass eine Regelung Kennfelder (56) enthält, in denen für eine gewünschte Alkalihypochloritkonzentration und die benötigte Produktionsmenge an $Cl_2$ pro Zeiteinheit der Elektrolyseanlage (5) zum Entnahmeausgleich zugehörige Soll-Parameterbereiche oder Sollwerte für eine zuzuführende Frischwassermenge, eine zuzuführende Solemenge und einen benötigten Zellenstrom enthalten sind,
   wobei die Kennfelder (56) verwendet werden, um den Arbeitspunkt bei der bestimmten, aufgrund der Abnahmemenge an Alkalihypochloritlösung benötigten Leistung der Elektrolyseanlagen (5) einzustellen.

2. Verfahren nach Anspruch 1, **dadurch gekennzeichnet, dass** der Arbeitspunkt der Elektrolyseanlage (5) derart geregelt wird, dass die Konzentration des Alkalihypochlorits in der durch die Elektrolyseanlage (5) hergestellten Alkalihypochlorit-Lösung konstant ist.

3. Verfahren nach Anspruch 1 oder 2, **dadurch gekennzeichnet, dass** eine Produktentnahme aus dem Vorratsbehälter (30) als Stellgröße in einem Regelkreis vorgesehen ist und die Produktionsmenge an $Cl_2$ pro Zeiteinheit in Abhängigkeit der Leistung der Elektrolyseanlage (5) und Durchflüsse an Sole und/oder Frischwasser der Elektrolyseanlage (5) Stellglieder darstellen.

4. Verfahren nach einem der vorhergehenden Ansprüche, **dadurch gekennzeichnet, dass** die auf einer Kathodenseite der Elektrolyseanlage (5) zugeführte Frischwassermenge erfasst und entsprechend des einzuregelnden Arbeitspunkts der Elektrolyseanlage (5) geregelt wird.

**5.** Verfahren nach einem der vorhergehenden Ansprüche, **dadurch gekennzeichnet, dass** die auf einer Anodenseite der Elektrolyseanlage (5) zugeführte Solemenge erfasst und entsprechend des einzuregelnden Arbeitspunkts der Elektrolyseanlage (5) geregelt wird.

**6.** Verfahren nach einem der vorhergehenden Ansprüche, **dadurch gekennzeichnet, dass** der zwischen der Anode und der Kathode der Elektrolyseanlage (5) fließende Zellenstrom erfasst und entsprechend des einzuregelnden Arbeitspunkts der Elektrolyseanlage (5) geregelt wird.

**7.** Verfahren nach einer der vorgehenden Ansprüche, **dadurch gekennzeichnet, dass** die Temperatur der Umgebungsluft und/oder die Temperatur des auf der Kathodenseite der Elektrolyseanlage (5) zugeführten Frischwassers und/oder die Temperatur der auf der Anodenseite zugeführten Sole und/oder die Produkttemperatur an einem Ausgang (25) der Elektrolyseanlage (5) und/oder die Temperatur einer Magersolerückführung und/oder eine Mischwassertemperatur der der Elektrolyseanlage (5) zugeführten Solelösung erfasst und mindestens eine dieser Temperaturen zur Einstellung des Arbeitspunkts der Elektrolyseanlage (5) herangezogen wird.

**8.** Elektrolyseanlage zur Herstellung einer Alkalihypochloritlösung, insbesondere von Natriumhypochlorit für die Verwendung zur Wasseraufbereitung, wobei die Elektrolyseanlage (5) eine Regeleinrichtung (50) zur Regelung des Arbeitspunkts der Elektrolyseanlage (5) aufweist und mit einer nachgeschalteten Abnahmeeinrichtung (40) verbunden ist, wobei weiter eine erste Erfassungseinrichtung (31) vorgesehen ist, welche kontinuierlich oder quasikontinuierlich eine durch die Abnahmeeinrichtung (40) entnommene Abnahmemenge an Alkalihypochloritlösung pro Zeiteinheit und/oder einen Füllstand an Alkalihypochloritlösung in einem zwischen Elektrolyseanlage (5) und Abnahmeeinrichtung (40) angeordneten Vorratsbehälter (30) erfasst und an die Regeleinrichtung (50) überträgt, und dass die Regeleinrichtung (50) den Arbeitspunkt der Elektrolyseanlage (5) derart regelt, dass eine Produktionsmenge an $Cl_2$ pro Zeiteinheit der Elektrolyseanlage (5) abhängig von der gemessenen Abnahmemenge pro Zeiteinheit und/oder dem aktuellen Füllstand des Vorratsbehälters (30) verändert wird,
**dadurch gekennzeichnet, dass** eine P-, I- oder D-Regelung oder Fuzzy-Regelung oder eine Kombination aus mindestens zwei dieser Regelungstypen als Regeleinrichtung (50) vorgesehen ist und
dass die Regelung Kennfelder (56) enthält, in denen für eine gewünschte Alkalihypochloritkonzentration und die benötigte Produktionsmenge an $Cl_2$ pro Zeiteinheit der Elektrolyseanlage (5) zum Entnahmeausgleich zugehörige Soll-Parameterbereiche oder Sollwerte für eine zuzuführende Frischwassermenge, eine zuzuführende Solemenge und einen benötigten Zellenstrom enthalten sind,
wobei die Kennfelder (56) verwendet werden, um den Arbeitspunkt bei der bestimmten, aufgrund der Abnahmemenge an Alkalihypochloritlösung benötigten Leistung der Elektrolyseanlagen (5) einzustellen.

**9.** Elektrolyseanlage nach Anspruch 8, **dadurch gekennzeichnet, dass** die Regeleinrichtung (50) den Arbeitspunkt der Elektrolyseanlage (5) derart regelt, dass die Konzentration des Alkalihypochlorit in der durch die Elektrolyseanlage (5) hergestellten Alkalihypochloritlösung konstant ist.

**10.** Elektrolyseanlage nach Anspruch 8 oder 9, **dadurch gekennzeichnet, dass** eine Produktentnahme aus dem Vorratsbehälter (30) als Stellgröße in einem Regelkreis vorgesehen ist und eine Produktionsmenge an $Cl_2$ pro Zeiteinheit in Abhängigkeit der Leistung der Elektrolyseanlage (5) und Durchflüsse an Sole und/oder Frischwasser der Elektrolyseanlage (5) Stellglieder darstellen.

**11.** Elektrolyseanlage nach einem der Ansprüche 8 bis 10, **dadurch gekennzeichnet, dass** eine zweite Erfassungseinrichtung vorgesehen ist, welche die auf einer Kathodenseite der Elektrolyseanlage (5) zugeführte Frischwassermenge erfasst, und dass die Regeleinrichtung (50) die zuzuführende Frischwassermenge entsprechend des einzuregelnden Arbeitspunkts der Elektrolyseanlage (5) regelt.

**12.** Elektrolyseanlage nach einem der Ansprüche 8 bis 11, **dadurch gekennzeichnet, dass** eine dritte Erfassungseinrichtung (17) vorgesehen ist, welche die auf einer Anodenseite der Elektrolyseanlage (5) zugeführte Solemenge erfasst, und dass die Regeleinrichtung (50) die zuzuführende Solemenge entsprechend des einzuregelnden Arbeitspunkts der Elektrolyseanlage (5) regelt.

**13.** Elektrolyseanlage nach einem der Ansprüche 8 bis 12, **dadurch gekennzeichnet, dass** eine vierte Erfassungseinrichtung vorgesehen ist, welche den zwischen einer Anode und einer Kathode der Elektrolyseanlage (5) fließenden Zellenstrom erfasst, und dass die Regeleinrichtung (50) den Zellenstrom der Elektrolyseanlage (5) entsprechend des einzuregelnden Arbeitspunkts regelt.

**EP 2 657 193 B1**

**14.** Elektrolyseanlage nach einem der Ansprüche 8 bis 13, **dadurch gekennzeichnet, dass** eine fünfte Erfassungseinrichtung (46), welche die Temperatur der Umgebungsluft erfasst, und/oder eine sechste Erfassungseinrichtung (47), welche die Temperatur des auf der Kathodenseite der Elektrolyseanlage (5) zugeführten Frischwassers erfasst, und/oder eine siebte Erfassungseinrichtung vorgesehen ist, welche die Temperatur der auf der Anodenseite der Elektrolyseanlage (5) zugeführten Sole erfasst und/oder eine achte Erfassungseinrichtung vorgesehen, welche die Temperatur einer Magersolerückführung erfasst, und/oder eine neunte Erfassungseinrichtung vorgesehen, welche die Temperatur des Produkts an einem Ausgang (25) der Elektrolyseanlage (5) erfasst, und/oder eine zehnte Erfassungseinrichtung, welche eine Mischwassertemperatur der der Elektrolyseanlage (5) zugeführten Solelösung erfasst, und dass die Regeleinrichtung (50) zur Einstellung des Arbeitspunkts der Elektrolyseanlage (5) mindestens eine der erfassten Temperaturen heranzieht.

**Claims**

**1.** A method for operating an electrolysis plant (5) for producing an alkali hypochlorite solution, in particular of sodium hypochlorite, used for water treatment,
wherein the electrolysis plant (5) is connected to a downstream removal device (40);
wherein a removed amount of alkali hypochlorite solution per unit of time, which is removed by the removal device (40), and/or a fill level of the alkali hypochlorite solution in a reservoir (30) arranged between the electrolysis plant (5) and removal device (40) is detected continuously or quasi-continuously, and
an operating point of the electrolysis plant (5) is controlled in such a way that the production amount of $Cl_2$ per unit of time of the electrolysis plant (5) is changed depending on the measured removed amount per unit of time and/or the current fill level of the reservoir (30),
**characterised in that** a P, I or D controller or a fuzzy controller or a combination of at least two of these controller types is used as a control device (50), and **in that** a controller contains characteristic diagrams (56), in which target parameter ranges for a desired alkali hypochlorite concentration and the required production amount of $Cl_2$ per unit of time of the electrolysis plant (5) associated with removal compensation, or target values for a fresh water amount that is to be supplied, a salt water amount that is to be supplied, and a required cell current are contained, wherein the characteristic diagrams (56) are used to adjust the operating point to the specific performance level of the electrolysis plant (5) required on account of the removed amount of alkali hypochlorite solution.

**2.** The method according to claim 1, **characterised in that** the operating point of the electrolysis plant (5) is controlled in such a way that the concentration of the alkali hypochlorite in the alkali hypochlorite solution produced by the electrolysis plant (5) is constant.

**3.** The method according to claim 1 or 2, **characterised in that** a product removal from the reservoir (30) is provided as manipulated variable in a control circuit, and the production amount of $Cl_2$ per unit of time depending on the performance level of the electrolysis plant (5) and throughflows of salt water and/or fresh water of the electrolysis plant (5) represent actuators.

**4.** The method according to any one of the preceding claims, **characterised in that** the fresh water amount supplied on a cathode side of the electrolysis plant (5) is detected and is controlled in accordance with the operating point of the electrolysis plant (5) that is to be set.

**5.** The method according to any one of the preceding claims, **characterised in that** the salt water amount supplied on an anode side of the electrolysis plant (5) is detected and is controlled in accordance with the operating point of the electrolysis plant (5) that is to be set.

**6.** The method according to any one of the preceding claims, **characterised in that** the cell current flowing between the anode and the cathode of the electrolysis plant (5) is detected and is controlled in accordance with the operating point of the electrolysis plant (5) that is to be set.

**7.** The method according to any one of the preceding claims, **characterised in that** the temperature of the ambient air and/or the temperature of the fresh water supplied on the cathode side of the electrolysis plant (5) and/or the temperature of the salt water supplied on the anode side and/or the product temperature at an outlet (25) of the electrolysis plant (5) and/or the temperature of a lean salt water return and/or a mixed water temperature of the salt water solution supplied to the electrolysis plant (5) are/is detected and at least one of these temperatures is used to adjust the operating point of the electrolysis plant (5).

8. An electrolysis plant for producing an alkali hypochlorite solution, in particular of sodium hypochlorite, used for water treatment, wherein the electrolysis plant (5) has a control device (50) for controlling the operating point of the electrolysis plant (5) and is connected to a downstream removal device (40), wherein a first detection device (31) is also provided, which continuously or quasi-continuously detects a removed amount of alkali hypochlorite solution which is removed by the removal device (40) per unit of time and/or a fill level of alkali hypochlorite solution in a reservoir (30) arranged between the electrolysis plant (5) and removal device (40), and transfers this information to the control device (50), and wherein the control device (50) controls the operating point of the electrolysis plant (5) in such a way that a production amount of $Cl_2$ per unit of time of the electrolysis plant (5) is changed depending on the measured removed amount per unit of time and/or the current fill level of the reservoir (30), **characterised in that** a P, I or D controller or fuzzy controller or a combination of at least two of these controller types is provided as control device (50), and **in that** the controller contains characteristic diagrams (56), in which target parameter ranges for a desired alkali hypochlorite concentration and the required production amount of $Cl_2$ per unit of time of the electrolysis plant (5) associated with removal compensation, or target values for a fresh water amount that is to be supplied, a salt water amount that is to be supplied, and a required cell current are contained, wherein the characteristic diagrams (56) are used to set the operating point to the specific performance level of the electrolysis plant (5) required on account of the removed amount of alkali hypochlorite solution.

9. The electrolysis plant according to claim 8, **characterised in that** the control device (50) controls the operating point of the electrolysis plant (5) in such a way that the concentration of the alkali hypochlorite in the alkali hypochlorite solution produced by the electrolysis plant (5) is constant.

10. The electrolysis plant according to claim 8 or 9, **characterised in that** a product removal from the reservoir (30) is provided as manipulated variable in a control circuit and a production amount of $Cl_2$ per unit of time depending on the performance of the electrolysis plant (5) and throughflows of salt water and/or fresh water of the electrolysis plant (5) represent actuators.

11. The electrolysis plant according to any one of claims 8 to 10, **characterised in that** a second detection device is provided, which detects the fresh water amount supplied on a cathode side of the electrolysis plant (5), and **in that** the control device (50) controls the fresh water amount that is to be supplied in accordance with the operating point of the electrolysis plant (5) that is to be set.

12. The electrolysis plant according to any one of claims 8 to 11, **characterised in that** a third detection device (17) is provided, which detects the salt water amount supplied on an anode side of the electrolysis plant (5), and **in that** the control device (50) controls the salt water amount that is to be supplied in accordance with the operating point of the electrolysis plant (5) that is to be set.

13. The electrolysis plant according to any one of claims 8 to 12, **characterised in that** a fourth detection device is provided, which detects the cell current flowing between an anode and a cathode of the electrolysis plant (5), and **in that** the control device (50) controls the cell current of the electrolysis plant (5) in accordance with the operating point that is to be set.

14. The electrolysis plant according to any one of claims 8 to 13, **characterised in that** a fifth detection device (46), which detects the temperature of the ambient air, and/or a sixth detection device (47), which detects the temperature of the fresh water supplied on the cathode side of the electrolysis plant (5), and/or a seventh detection device is provided, which detects the temperature of the salt water supplied on the anode side of the electrolysis plant (5) and/or an eighth detection device is provided, which detects the temperature of a lean salt water return, and/or a ninth detection device is provided, which detects the temperature of the product at an outlet (25) of the electrolysis plant (5), and/or a tenth detection device, which detects a mixed water temperature of the salt water solution supplied to the electrolysis plant (5), and **in that** the control device (50) uses at least one of the detected temperatures to adjust the operating point of the electrolysis plant (5).

**Revendications**

1. Procédé d'utilisation d'une installation d'électrolyse (5) pour la production d'une solution d'hypochlorite alcalin, en particulier d'hypochlorite de sodium, destinée à une utilisation pour le traitement de l'eau, l'installation d'électrolyse (5) étant connectée à un dispositif de prélèvement (40) installé en aval,

dans lequel, en continu ou quasiment en continu, une quantité prélevée par le dispositif de prélèvement (40) par unité de temps de solution d'hypochlorite alcalin et/ou un niveau de remplissage de la solution d'hypochlorite alcalin est enregistré dans une cuve de réserve (30) disposée entre l'installation d'électrolyse (5) et le dispositif de prélèvement (40) et

un point de travail de l'installation d'électrolyse (5) est réglé de manière à ce que la quantité produite de Cl2 par unité de temps de l'installation d'électrolyse (5) soit modifiée en fonction de la quantité de prélèvement mesurée par unité de temps, et/ou du niveau de remplissage actuel de la cuve de réserve (30), **caractérisé en ce qu'**un régleur de P, I ou D ou régleur flou ou une combinaison d'au moins deux de ces types de régleurs est utilisé comme dispositif de réglage (50) et

qu'un réglage englobe des champs caractéristiques (56) dans lesquels, pour une concentration souhaitée en hypochlorite alcalin et la quantité de production nécessaire de Cl2 par unité de temps de l'installation d'électrolyse (5), sont contenues des plages de paramètres théoriques ou valeurs théoriques pour une quantité d'eau fraîche acheminée, une quantité de saumure à acheminer et un flux cellulaire nécessaire servant à compenser le prélèvement,

les champs caractéristiques (56) étant utilisés pour régler le point de travail à la puissance définie nécessaire en raison de la quantité de prélèvement de solution d'hypochlorite alcalin de l'installation d'électrolyse (5).

2. Procédé selon la revendication 1, **caractérisé en ce que** le point de travail de l'installation d'électrolyse (5) est réglé de manière à ce que la concentration en hypochlorite alcalin soit constante dans la solution d'hypochlorite alcalin produite par l'installation d'électrolyse (5).

3. Procédé selon la revendication 1 ou 2, **caractérisé en ce qu'**un prélèvement de produits dans la cuve de réserve (30) est prévu sous forme de paramètre de réglage dans un circuit de réglage et que la quantité de production de Cl2 par unité de temps en fonction de la puissance de l'installation d'électrolyse (5) et les débits de saumure et/ou d'eau fraîche de l'installation d'électrolyse (5) constituent des éléments de réglage.

4. Procédé selon une des revendications précédentes, **caractérisé en ce que** la quantité d'eau fraîche acheminée sur un côté cathode de l'installation d'électrolyse (5) est détectée et réglée en fonction du point de travail à régler de l'installation d'électrolyse (5).

5. Procédé selon une des revendications précédentes, **caractérisé en ce que** la quantité de saumure acheminée sur un côté anode de l'installation d'électrolyse (5) est détectée et réglée en fonction du point de travail à régler de l'installation d'électrolyse (5).

6. Procédé selon une des revendications précédentes, **caractérisé en ce que** le flux cellulaire s'écoulant entre l'anode et la cathode de l'installation d'électrolyse (5) est détecté et réglé en fonction du point de travail à régler de l'installation d'électrolyse (5).

7. Procédé selon une des revendications précédentes, **caractérisé en ce que** la température de l'air ambiant et/ou la température de l'eau fraîche acheminée sur le côté cathode de l'installation d'électrolyse (5) et/ou la température de la saumure acheminée sur le côté anode et/ou la température du produit à une sortie (25) de l'installation d'électrolyse (5) et/ou la température d'un renvoi de saumure maigre une température d'eau mélangée de la solution de saumure acheminée à l'installation d'électrolyse (5) est détectée et qu'au moins une de ces températures est utilisée pour régler le point de travail de l'installation d'électrolyse (5) .

8. Installation d'électrolyse pour la production d'une solution d'hypochlorite alcalin, en particulier d'hypochlorite de sodium, destinée à une utilisation pour le traitement de l'eau, l'installation d'électrolyse (5) présentant un dispositif de réglage (50) pour régler le point de travail de l'installation d'électrolyse (5) et étant connectée à un dispositif de prélèvement (40) installé en aval, étant prévu en outre un premier dispositif de détection (31) qui, en continu ou quasiment en continu, détecte et transfère au dispositif de réglage (50) une quantité prélevée par le dispositif de prélèvement (40) par unité de temps de solution d'hypochlorite alcalin et/ou un niveau de remplissage de la solution d'hypochlorite alcalin dans une cuve de réserve (30) disposée entre l'installation d'électrolyse (5) et le dispositif de prélèvement (40), et que le dispositif de réglage (50) règle le point de travail de l'installation d'électrolyse (5) de manière à ce qu'une quantité produite de Cl2 par unité de temps de l'installation d'électrolyse (5) soit modifiée en fonction de la quantité de prélèvement mesurée par unité de temps, et/ou du niveau de remplissage actuel de la cuve de réserve (30),

**caractérisée en ce qu'**un régleur de P, I ou D ou régleur flou ou une combinaison d'au moins deux de ces types de régleurs est prévue comme dispositif de réglage (50) et que

le réglage englobe des champs caractéristiques (56) dans lesquels, pour une concentration souhaitée en hypochlorite alcalin et la quantité de production nécessaire de Cl2 par unité de temps de l'installation d'électrolyse (5), sont contenues des plages de paramètres théoriques ou valeurs théoriques servant à compenser le prélèvement pour une quantité d'eau fraîche à acheminer, une quantité de saumure à acheminer et un flux cellulaire nécessaire à acheminer,

les champs caractéristiques (56) étant utilisés pour régler le point de travail à la puissance définie nécessaire en raison de la quantité de prélèvement de solution d'hypochlorite alcalin des installations d'électrolyse (5).

9. Installation d'électrolyse selon la revendication 8, **caractérisée en ce que** le dispositif de réglage (50) règle le point de travail de l'installation d'électrolyse (5) de manière à ce que la concentration en hypochlorite alcalin soit constante dans la solution d'hypochlorite alcalin produite par l'installation d'électrolyse (5).

10. Installation d'électrolyse selon la revendication 8 ou 9, **caractérisé en ce qu'**un prélèvement de produit dans la cuve de réserve (30) est prévu sous forme de paramètres de réglage dans un circuit de réglage, et qu'une quantité produite de Cl2 par unité de temps en fonction de la puissance de l'installation d'électrolyse (5) et les débits de saumure et/ou d'eau fraîche de l'installation d'électrolyse (5) constituent des éléments de réglage.

11. Installation d'électrolyse selon une des revendications 8 à 10, **caractérisé en ce qu'**il est prévu un deuxième dispositif de détection qui détecte la quantité d'eau fraîche acheminée sur un côté cathode de l'installation d'électrolyse (5), et que le dispositif de réglage (50) règle la quantité d'eau fraîche à acheminer en fonction du point de travail à régler de l'installation d'électrolyse (5).

12. Installation d'électrolyse selon une des revendications 8 à 11, **caractérisé en ce qu'**il est prévu un troisième dispositif de détection (17) qui détecte la quantité de saumure acheminée sur un côté anode de l'installation d'électrolyse (5), et que le dispositif de réglage (50) règle la quantité de saumure acheminée en fonction du point de travail à régler de l'installation d'électrolyse (5).

13. Installation d'électrolyse selon une des revendications 8 à 12, **caractérisé en ce qu'**il est prévu un quatrième dispositif de détection qui détecte le flux cellulaire s'écoulant entre une anode et une cathode de l'installation d'électrolyse (5), et que le dispositif de réglage (50) règle le flux cellulaire de l'installation d'électrolyse (5) en fonction du point de travail à régler.

14. Installation d'électrolyse selon une des revendications 8 à 13, **caractérisé en ce qu'**il est prévu un cinquième dispositif de détection (46) qui détecte la température de l'air ambiant, et/ou un sixième dispositif de détection (47) qui détecte la température de l'eau fraîche acheminée sur le côté cathode de l'installation d'électrolyse (5), et/ou qu'il est prévu un septième dispositif de détection qui détecte la température de la saumure acheminée sur le côté anode de l'installation d'électrolyse (5), et/ou qu'il est prévu un huitième dispositif de détection qui détecte la température d'un retour de saumure maigre, et/ou qu'il est prévu un neuvième dispositif de détection qui détecte la température du produit à une sortie (25) de l'installation d'électrolyse (5), et/ou un dixième dispositif de détection qui détecte une température d'eau mélangée de la solution de saumure acheminée à l'installation d'électrolyse (5), et que le dispositif de réglage (50), pour régler le point de travail de l'installation d'électrolyse (5), utilise au moins une des températures détectées.

Fig.1

Fig.2

Fig.3

16

Fig.4

EP 2 657 193 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 29722822 U1
- WO 2007065228 A1
- EP 0792584 A1
- FR 2865479 A1
- US 4329215 A